# EUROPEAN PATENT APPLICATION

(11) **EP 2 556 776 A1**
(43) Date of publication of application: **13.02.2013**
(21) Application number: 12179629.6
(22) Date of filing: 08.08.2012
(51) Int. Cl.: A47J 31/00, A47J 31/54

(54) **Method for the preparation of infusions**

(30) Priority: 12.08.2011 EP 11425221
(71) Applicant: Paratico, Roberto, 24040 Levate (BG) (IT); Melandri, Primo, 48022 Lugo (RA) (IT); Tabanelli, Alessandra, 48022 Lugo (RA) (IT)
(72) Inventor: Paratico, Roberto, 24040 Levate (BG) (IT); Melandri, Primo, 48022 Lugo (RA) (IT); Tabanelli, Alessandra, 48022 Lugo (RA) (IT)
(74) Representative: Ferreccio, Rinaldo

(57) **Abstract**

The invention relates to a method and system for the preparation of a cup of ready to drink single serving drink comprising the steps of: a) infusing an infusion material (3a), which is contained in a filtering device (3), in a single serving size cup containing a liquid; and b) exposing the cup containing a liquid and the infusion material to microwave radiation for a predetermined radiation time, wherein the liquid heats up during said radiation time to a temperature comprised between 70 and 90 °C and wherein the infusion material is immersed in the liquid prior to its exposure to the microwaves.

The system comprises an apparatus (1) comprising a fully microwave-permeable cup (2), a removable lid (5), and a fully microwave-permeable filtering device (3) apt to contain the infusion material (3a).

## Description

### Field of application

The present invention generally relates to the technical field of the preparation of hot drinks, particularly infusions such as tea, coffee, barley coffee, chamomile tea, tisanes (or herbal teas), aromatic drinks and drinks based thereon.

In particular, the present invention relates to a method for the preparation of a cup of ready to drink single serving hot drink by microwave radiation.

The present invention also relates to a system for implementing the method according to the present invention.

### Prior art

Several methods are known for the preparation of hot drinks, such as for example tea, coffee, barley coffee, chamomile tea, tisanes, aromatic drinks and the like.

The best known traditional methods for the preparation of coffee comprise, for example, the use of the moka pot or of the espresso coffee machine, which are based on the principle of the infusion of boiling water under pressure; of the Neapolitan coffee maker; the use of coffee filter machines (in the case of American coffee and of the coffee plunger); and of a particular "ibrik" pot (in the case of Turkish coffee).

In the case of tea, the infusion is traditionally carried out in a teapot. The preparation of tea involves the use of a filter, a strainer, or a (tea)bag to separate the leaves from the infusion water. The preparation also involves allowing for a given infusion time.

Chamomile tea, tisanes and aromatic drinks are prepared similarly to tea: water is boiled, herbs (or aromatic herbs) are added and it is allowed to rest for a given time. In the case of decoction, water must be brought to boil again after the addition of the herbs (or aromatic herbs), and then allowed to rest.

Throughout the last decades, however, as people increasingly spend more of their time outside the home and in shared environments, the need has arisen to make the preparation of single serving hot drinks more practical, clean, inexpensive and rapid. In particular, there is the need for a method that enables to prepare an organoleptically high quality single serving cup of a hot drink which requires little preparation or handling before infusion; no handling during infusion; and which is ready to drink after infusion thus requiring no handling on the part of the user after the infusion, such as straining, dunking, squeezing, disassembling, pouring, etc.; and which involves little waiting time after infusion before it is at a temperature suitable for drinking.

In fact, said traditional methods require particular apparatuses, usually composed of many complex parts, as is the case for example of the coffee moka pot, and often designed and optimised for the preparation of relatively large drink volumes in the home environment, such as for example the teapot or the coffee plunger, which are usually designed for at least 3 or 4 servings. In other instances the above methods may involve the use of expensive machines, such as the espresso coffee machine. Such methods thus involve boiling and infusion times or methods which do not suit the requirements of fast out of home catering for individual users, such as for example in the workplace. In some cases, such as for example in the case of tea, it is common to substitute for the traditional teapot method with dipping the teabag straight into the teacup. However, this approach usually leads to a tea of a poorer quality compared to tea that is traditionally made and it requires, in any case, a certain degree of handling and attention by the user.

Solutions to overcome said drawbacks have thus been devised in the past years. A very widespread solution is given by freeze-dried (or instant) products. In fact, it is common to find freeze-dried products such as tea, coffee, cappuccino, tisanes, hot chocolate, and other drinks, more or less sugared and flavored, to be prepared by the sole addition of boiling water or hot milk directly in a cup.

However, this solution has an evident drawback given by the fact that the resulting hot drinks are clearly different, from the organoleptic point of view, from the corresponding hot drinks prepared according to their respective traditional methods.

Another well-known solution is given by single-dose pods, to be used in association with a dedicated machine and in which boiling water passes through a pod containing a powder of tea, coffee, barley coffee or other, and the so-obtained infusion is directly dispensed in a cup.

However, the drawbacks of this solution reside in the fact that the preparations are not customizable, since the available pod selection is limited to that provided by producers, and by the corresponding machine at one's disposal (the pods, in fact, can often only be used on a machine by the same producer), so the consumer has only a limited choice of drinks at his disposal. Moreover, the quality, from the organoleptic point of view, of the product obtained by such a solution, is inferior (or in any case different) to that of the corresponding traditionally-prepared infusion. Finally, the cost of such a pod and machine system is relatively high.

Both at home and in work environments, such as for example in offices, the presence of a microwave oven is becoming ever more widespread, and, therefore, over the last few years many attempts have been made to conceive apparatuses that allow to prepare in the microwave oven recipes that are typically prepared on a stove or in a traditional oven.

Concerning infusions in particular, several versions are available on sale of an apparatus for the preparation of infusions in a microwave oven. These are apparatuses made of microwave-compatible and microwave-transparent, i.e. microwave-permeable, materials, whose operating mechanism reproduces under many aspects that of the traditional moka pot: the microwaves heat the water contained in a tank bringing it to the boil; the water passes through a filter containing leaves or powder of coffee, tea, tisanes, barley coffee, etc., according to the drink to be prepared, and the infusion coming out of the filter then goes and deposits in a pot.

Examples of said or similar apparatuses are found for example in the US patent no. 5,902,620 (Nolan), in the patent application no. WO 02/060306 (Alves), in the US patent no 5,281,785 (Pasbrig), in the US patent no. 4,908,222 (Yu), in the US patent no. 5,747,782 (Orrico). A disposable apparatus is described in the US patent application 2005/0211102 (Yu et al.).

Nevertheless, these apparatuses suffer from a considerable drawback given by the quality of the obtained infusion. In fact, the obtained infusion has organoleptic properties that are remarkably inferior to those of the corresponding infusion prepared according to conventional methods.

Moreover, such apparatuses are composed of many parts, are complex to use, and need to be assembled before use, the infusion material must be put in the appropriate section, and they must be disassembled and washed after use, thus requiring a considerable amount of handling by the user. Also, such apparatuses can be relatively expensive.

The problem underlying the present invention is thus to make available a method for the preparation of a cup of ready to drink single serving hot drink, particularly an infusion, such as for example coffee, tea, tisanes etc., having optimal organoleptic qualities comparable with those of the corresponding infusion made by traditional methods, which exploits the microwave radiation and which is at the same time simple, practical, safe, clean and rapid to carry out, which requires very little handling on the part of the user, as well as being economical.

Another problem underlying the present invention is that of making available a method for the preparation of a cup of ready to drink single serving hot drink, which exploits the microwave radiation and which, at the end of the radiation time, is at a temperature which is suitable for drinking, thus avoiding long waiting times.

### Summary of the invention

The present invention relates to a method for the preparation of a cup of ready to drink single serving hot drink comprising the steps of:
a) infusing an infusion material, which is contained in a filtering device, in a single serving size cup containing a liquid; and
b) exposing the cup containing the liquid and the infusion material to microwave radiation for a predetermined radiation time,
wherein the liquid heats up during such radiation time to a temperature comprised between 70 and 90 °C and wherein the infusion material is immersed in the liquid prior to its exposure to the microwaves.

Preferably, the liquid is water, milk (whole, skimmed or diluted), soya or rice milk, more preferably water.

Preferably, the liquid in step a) is at room temperature.

Preferably, the infusion material is a plant material suitable for infusion for the preparation of tea, coffee, barley coffee, chamomile tea, tisanes, aromatic drinks, and the like.

Preferably, the filtering device is a filter-bag or a pod.

Preferably, the liquid is heated up in step b) to a temperature comprised between 70 and 80 °C, more preferably about 70 °C

Preferably, the microwave radiation is performed at a power comprised between 500 and 1200 Watts for a period of time comprised between 1 minute and 3 minutes. Typically, the power is optimized according to the kind of substance to be extracted, the range being about 500 W for coffee and about 800 W for tea and herbal blends.

Preferably, said method is carried out by means of an apparatus comprising a fully microwave-permeable cup, a fully microwave-permeable filtering device containing said infusion material, and a removable lid.

Preferably, the lid is leak-tight re-closeable onto the cup.

Preferably, said apparatus comprises a safety vent means.

The present invention also relates to a system for carrying out the above-described method, comprising an infusion material and an apparatus comprising a fully microwave-permeable cup, a removable lid and a fully microwave-permeable filtering device which is apt to contain such an infusion material.

Preferably, said filtering device is a filter-bag or a pod.

Preferably, the apparatus comprises a safety vent means, more preferably a vent valve made on a perimetrical wall of the apparatus.

Preferably, the cup consists of a rigid microwave-permeable plastic material chosen from the group consisting of polycarbonate (PC), polypropylene (PP), polyethylene (PE) and polyethylene terephthalate (PET), more preferably polycarbonate.

Preferably, the filtering device is made of a material such as a filter paper or a cotton gauze, more preferably of materials (filter paper or cotton gauze) not bleached with optical bleaching agents.

Preferably the removable lid is leak-tight re-closeable onto the cup.

Preferably, the removable lid is also made of a rigid microwave-permeable plastic material chosen from the group consisting of polycarbonate (PC), polypropylene (PP), polyethylene (PE) and polyethylene terephthalate (PET), more preferably polycarbonate.

Preferably, the lid consists of the same rigid plastic material as the cup, preferably polycarbonate.

Preferably, said apparatus comprises a handle.

Preferably, the apparatus comprises a protection means, more preferably a container external to the cup or a band placed over a portion of the outer surface of the cup.

Preferably, the cup and the lid are apt for mutual engagement, when closing the apparatus, by screw, bayonet, snap coupling or equivalents.

Preferably, the apparatus comprises sealing means, for example gaskets, applied to the cup or to the lid, apt to result in a hermetic or leak-tight sealing of the apparatus.

In one embodiment, the apparatus comprises a covering film of the cup containing the liquid, and a filtering device interposed between the film and the lid.

### Brief description of the drawings

Figure 1 is a schematic drawing representing an embodiment of the apparatus according to the present invention.
Figure 2 is a schematic drawing representing another embodiment of the apparatus according to the present invention.

### Detailed description of the invention

The present invention relates to a method for the preparation of a cup of ready to drink single serving hot drink comprising the steps of:
a) infusing an infusion material, which is contained in a filtering device, in a single serving size cup containing a liquid; and
b) exposing the cup containing the liquid and the infusion material to microwave radiation for a predetermined radiation time,
wherein the liquid heats up during such radiation time to a temperature comprised between 70 and 90 °C and wherein the infusion material is immersed in the liquid prior to its exposure to the microwaves.

In the context of the present invention, the expression "ready to drink" refers to the fact that when the radiation time is over and the hot drink is taken out of the microwave oven, the preparation method is terminated and the hot drink has a temperature that is suitable for drinking immediately straight from the cup.

In other words, the cup of hot drink of the present invention can be taken out of the microwave oven and the hot drink can be drunk immediately from the cup of the method without the need to carry out further preparation steps such as pouring the hot drink, disassembling or partially disassembling the cup, straining the hot drink, or allowing it to settle or further brew.

In the context of the present invention, the expression "single serving" refers to the fact that the drink of the present invention is of the volume suitable or standard for a serving. For example about 200 ml and/or about 75 or 100 ml for certain types of coffee.

In the context of the present invention the term "cup" refers to a container suitable for drinking hot beverages, having a top opening that determines one cavity for receiving liquid, the cavity being free of additional components forming separate areas within the cavity.

In the context of the present invention the term "infusion material" refers to material which is suitable to be infused for preparing a hot drink, such as for example tea leaves, ground coffee or barley powder, herbal tea or chamomile leaves or flowers, and/or any other standard material of this type and for this purpose.

In the context of the present invention the expression "room temperature" refers to a temperature comprised between 20 and 25 °C.

In general, the temperatures indicated in the present text, including the boiling temperatures, are referred to atmospheric pressure (101.3 kPa).

As already mentioned above, existing methods and apparatuses for the preparation of an infusion in a microwave oven lead to drinks having organoleptic characteristics which are different and often inferior to those of the corresponding drinks prepared according to the respective traditional methods.

In fact, in the attempt to reproduce as faithfully as possible the operating mechanism of their respective traditional methods, for example a moka pot in the case of coffee, these microwave-oven methods and apparatuses of the prior art generally involve the fact of putting the infusion material in a filter that then enters into contact with the water upon boiling of the latter upon exposure to the microwaves. In this way, however, water comes into contact with the coffee after the dry infusion material has already been exposed to microwaves for a certain amount of time.

It has now been surprisingly found that, when the infusion material (tea, coffee, tisanes, barley coffee, etc.) is in the damp state straight from its first exposure to the microwaves, an infusion is obtained, which has considerably improved organoleptic characteristics with respect to an infusion prepared according to prior art microwave-oven methods discussed above. Moreover, it has been found that when such infusion material is made to infuse in a liquid that is at a temperature lower than boiling temperature, for example 70-90 °C, the quality and functionality of the resulting hot drink is further improved. In particular, the organoleptic qualities are optimal, often superior, and in any case comparable to the corresponding drink prepared according to traditional methods and any functional characteristics of the hot drink are improved.

Without wishing to be bound by theory, it is hypothesised that the prior art methods exploiting microwave radiation lead to drinks having inferior organoleptic characteristics than the corresponding drinks prepared in a traditional way because the microwaves, by radiating the infusion material (in powder or leaves) during the whole time period prior to contact with the water, cause a certain damage to the infusion material. The subsequent contact of the irradiated infusion material with water at boiling temperature further contributes to poorer quality and functionality of the resulting hot drink.

Said damage mainly consists in the substantial burning of the infusion material or in any case in a serious thermal damage, with loss of the integrity of the characteristics of the essential oils and of the molecules of the noble substance and of the active ingredients, such a loss affecting the extracting capabilities of the water as it passes through the infusion material.

It follows that the infusion produced by the infusion material that is exposed to microwaves when it is still in its dry state, as in the case of the prior art, is inferior from the organoleptic point of view. Such an infusion has altered taste and aroma with respect to those of the corresponding traditionally-prepared drink.

Moreover, it has been found that, in association with the above-described expedients, it is preferable that the water contacting the infusion material is at a temperature not higher than 90 °C, particularly comprised between 70 and 90 °C, even more preferably between 70 and 80 °C, more preferably still at about 70 °C.

Because of the temperatures used, in the method of the present invention there is no generation of considerable quantities of vapor, and the extraction of the aromatic components and active ingredients from the infusion material occurs at a far lower temperature than the liquid boiling temperature.

Moreover, it has been found that, due to the combination of said specific expedients of this method, the microwaves can perform a very efficient particularly-improved extraction of the aromatic components and of the active ingredients of the infusion material, (essential oils, green tea polyphenols, caffeine, etc.), compared to the prior art methods.

Moreover, in the method of the present invention, by way of the action of the microwaves, there is not only an improved extraction of particular components of the infusion material, as explained above, but also a greater preservation thereof from alterations. The improved extraction quality and the preservation of the integrity of the noble substance molecules, such as phenolic acids and caffeine, are obtained only if the extraction process occurs without exposing the infusion material in the dry state to microwave action, thus preventing, as mentioned above, the burning of a part of the substance.

In fact, the damage to the essential oils and the molecules of noble substances and of the active ingredients causes an impoverishment in any beneficial properties of the drink, such as for example the diuretic, purifying, laxative, relaxing, slimming, digestive, carminative properties etc., associated to the plants wherefrom the infusion material derives.

It has been found that, in the case of green tea, there is a 10% increase in the extraction of phenolic acids, flavonoids and flavonols, in half the extraction times (that is to say, radiation times) and at a final temperature of about 80 °C, if compared with 100°C of conventional methods. Moreover, the microwave extraction process, controlled at a suitable temperature, has allowed the maximum preservation of the flavonol molecule (particularly quercetin).

In the case of coffee, it has been estimated that, in this case too, there is a 10% increase in the extraction of caffeine with respect to the coffee obtained through the traditional percolating technique, once again in half the extraction (or radiation) times and at a final temperature of about 80 °C, if compared with 100°C of conventional methods.

A drink is thus obtained, in the case of the present invention, which is not only superior from the organoleptic point of view, but which also has improved functional activities.

For example, in the case of green tea extracts, it is known that flavonoids, particularly flavonols, have recognized beneficial properties relating to the risk of developing cardiovascular problems, such as antitumoral agents, and against neurodegeneration.

The most widespread polyphenols in green tea are catechin (C), epicatechin (EC), gallocatechin (GC), epigallocatechin (EGC), catechin 3-*O*-gallate (CG), gallocatechin 3-*O*-gallate (GCG), epicatechin 3-*O*-gallate (ECG) and epigallocatechin 3-*O*-gallate (EGCG). These molecules are known for their antioxidant action in the organism.

The improved extraction and preservation of the functional components of the infusion material entails, in turn, the possibility to use smaller quantities of infusion material, compared to the prior art, in the preparation of a drink.

In practice, the method of the present invention involves the exposure of the liquid and of the infusion material to microwave radiation at a power variable between 500 and 1200 Watts for a time above one minute, for example comprised between 1 minute and 3 minutes. Typically, the power is optimized according to the kind of substance to be extracted, the range being about 500 W for coffee and about 800 W for tea and herbal blends. In this way there is a rapid heating, allowing the preservation of the quality of the drink to be obtained.

In this way, the preparation of a drink is obtained, the drink having organoleptic properties very much comparable, and in some cases considerably superior, to the corresponding traditionally-prepared drink, with a considerably lower energy consumption and overall preparation time and effort.

Moreover, the method is also particularly simple, practical, rapid and clean, as it does not require the use of additional utensils, nor the intervention of the user during the radiation time and after the radiation time for the preparation of the hot drink.

At the end of the preparation, at the time of extraction of the drink from the microwave oven, the drink will be easily extractable without the need to resort to pot holders, tea-towels, etc. and without the risk of burning oneself and it will be ready for consumption straight from the cup, without the need to further intervene to terminate the preparation and without the need to wait for a long time before it reaches a temperature at which it can be consumed without burning oneself.

According to a preferred embodiment, therefore, the method of the present invention consists in a method for the preparation for example of a tea, coffee, tisanes, barley coffee, aromatic drink or other, wherein a filter-bag containing the infusion material is immersed in a cup of liquid, for example water, and wherein the cup containing the liquid and the infusion material is heated up in a microwave oven at a temperature of 70-75 °C until said desired drink is obtained.

Said liquid can be water, milk (whole, skimmed or diluted), soya or rice milk or any other liquid or drink which is apt to be infused and aromatized with an infusion material.

In a preferred embodiment, the liquid is water and the infusion material is coffee.

In another preferred embodiment, the liquid is water and the infusion material is green tea.

In other embodiments, the infusion material can be tea, chamomile tea, barley coffee, herbal mixtures, as well as ginseng or guarana and the like.

In another embodiment, the liquid is milk, the infusion material is coffee and the final drink is milk coffee ("*caffè latte"*)*.*

The final user will be able to adapt the choice of the liquid and of the infusion material to his needs and preferences in order to prepare different and customized drinks.

For example, it will be possible to add to the cup sugar, fructose, sweetener or honey, to prepare a sweetened drink.

In a further aspect thereof, the present patent application relates to a system for carrying out the method according to the invention, as described in claim 10.

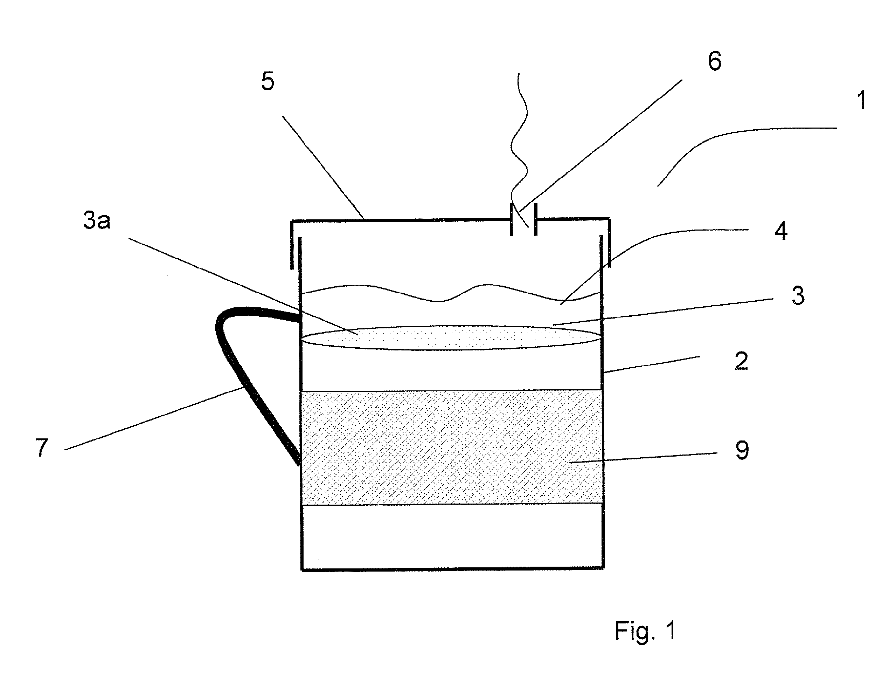

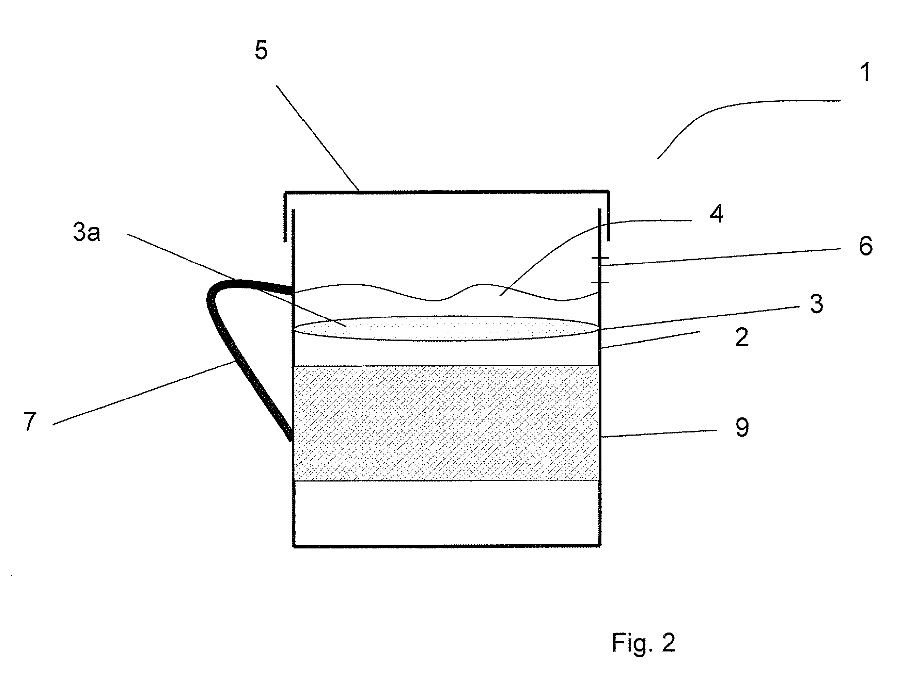

Such system consists of an apparatus and of the infusion material. The apparatus will be now better described with reference to figures 1 and 2, wherein the apparatus is globally indicated with reference number 1.

The apparatus 1 comprises a cup 2 containing a liquid 4, a filtering device 3 and a removable lid 5.

The cup 2 can be of several shapes and it is apt to hold a quantity of liquid suitable for one serving of the final drink.

The removable lid 5 can be hermetically-tight re-closable onto the cup.

The materials used to make the cup 2 and the filtering device 3 are specifically fully microwave-permeable and suitable to be exposed to microwaves without deteriorating the organoleptic qualities of food materials with which they come into contact. The lid 5 can also be made of such a material.

The cup can be made of a rigid plastic material suitable for use in a microwave oven and microwave-permeable. Examples of such materials are polycarbonate (PC), polypropylene (PP), polyethylene (PE) and polyethylene terephthalate (PET). In a preferred embodiment, the cup is made of polycarbonate.

The filtering device 3 can be soft or rigid and it is apt to contain the infusion material 3a, for example tea, coffee, chamomile tea, tisanes, barley coffee, etc., in the required quantities with respect to the quantity of liquid being present.

If it is soft, such as for example a filter-bag, it can be made of a material such as paper or cotton gauze preferably of materials not bleached with optical bleaching agents.

If it is rigid, such as for example in the case of a pod or capsule, it can be made of a rigid plastic material which is suitable for the use in a microwave oven and microwave-permeable. Examples of said materials are polycarbonate (PC), polypropylene (PP), polyethylene (PE) and polyethylene terephthalate (PET).

In a preferred embodiment, the filtering device is soft, as shown in figures 1 and 2, and it is made of a filter paper or cotton gauze which has not been bleached by optical bleaching agents.

In a preferred embodiment, the filtering device 3 is of the disposable type.

The filtering device 3 is apt to enter into contact with the liquid in the cup 2 prior to the exposure of the apparatus to the microwaves.

Such contact can be created by immersing the filtering device 3 into the liquid 4 or it can automatically occur when a liquid is poured into the cup 2 already containing the filtering device. The filtering device can be secured to the cup by fixing means (not shown) or it can be free. Preferably, the filtering device is fixed to the cup by a pressure coupling, for example placed in a suitable position and tightened by a rapid quarter turn screw system.

The lid 5 can be made of a rigid plastic material which is suitable for the use in a microwave oven and microwave-permeable. Examples of said materials are polycarbonate (PC), polypropylene (PP), polyethylene (PE) and polyethylene terephthalate (PET). In a preferred embodiment, the cup is made of polycarbonate.

In a preferred embodiment, the lid 5 is made of the same material as the cup 2.

Preferably, the apparatus has a vent means 6. Such vent means 6 can be made in the upper part of the cup 2 or, preferably, on a perimetrical wall of the cup 2, near the opening.

The vent means 6, which can be a valve, a labyrinth bore or other expedients known in the field, has the function of allowing vapor to exit if the pressure within the cup 2 becomes excessive, as a consequence of the rise in the temperature of the liquid 4.

It can be also envisaged to have the vent onto the lid, as in Figure 1.

In the case of the present invention, it is not contemplated that the temperature of the liquid 4 should exceed 90 °C, temperature at which there is no generation of considerable quantities of vapor. Therefore, the internal pressure of the cup 2 is never such as to necessarily require a vent. However, as a precautionary measure, it is advisable to contemplate the presence of a vent in the apparatus of the invention. In fact, a fortuitous excessive pressure within the apparatus could lead to the extreme consequence of an explosion of the apparatus with the ejection of vapor during its use.

Figures 1 and 2 show a handle 7, optionally contemplated for an easier and safer grip on the apparatus. Obviously this handle, if present, can be of any shape and size.

In alternative or in addition to the handle 7, the apparatus can have a protection means 9, which can take the form of a container external to the cup, with the possible interposition of an interspace, or of a band placed over a portion of the outer surface of the cup (as in the case of Figures 1 and 2). The aim of protection means is to allow the user to hold the apparatus without burning his hands. Of course, any other device commonly known in the art for the same purpose can be contemplated for use in association with the apparatus of the present invention.

Therefore, in a preferred embodiment, and by using the apparatus 1, the method of the present invention is carried out by the steps of making available in a cup 2 a filter-bag 3 containing some infusion material 3a; pouring a liquid, preferably water, into the cup 2 so that the filter 3 is immersed in such liquid; putting a removable lid 5 equipped with a vent valve 6 onto the cup 2 in order to seal it; putting the apparatus 1 in a microwave oven for a predetermined radiation time.

In another embodiment of the system according to the present invention, in the apparatus 1 is contemplated the presence of a covering film, for example of plastic material, for the cup 2 containing the liquid 4, and the presence of a filtering device 3 interposed between said film and the lid 5. In particular, this embodiment relates to a disposable apparatus wherein the user must remove the film, immerse the filtering device 3 containing the infusion material into the cup containing the liquid, put the lid on and put the so-obtained apparatus into the microwave oven.

In a preferred embodiment, the cup and the lid are apt for mutual engagement upon closing, through coupling means, for example complementary threads on the cup and on the lid respectively, a snap or bayonet closure or other expedients known to the person skilled in the art (not shown in the figures).

In a further preferred embodiment, the apparatus 1 has sealing means (not shown), for example a perimetrical gasket and a snap closing lever overcoming a dead center, in order to obtain a hermetic sealing of the apparatus between the cup 2 and the removable lid 5. Such sealing means can be for example gaskets intended to be applied to the cup or to the removable lid.

Thanks to all the features described above, the method and system according to the invention have the advantage of allowing a preparation of a cup of single serving ready to drink hot drink that is convenient, easy, safe and rapid. For the preparation of the drink on the part of the user, there is no need to use any additional utensil or kitchenware nor for any intervention on the part of the user during and after the radiation time for the preparation of the hot drink, and the drink is ready for consumption at the end of the microwave radiation time.

From the cost point of view, the method of the present invention allows to use smaller quantities, down to 30-50% less, of infusion material with respect to a prior art common infusion pod. This aspect is a considerable economic advantage.

Finally, the apparatus cup comprised in the system according to the present invention is of a simple shape and, for the purposes of the invention, there is no need for any groove, rib, partition or other similar expedients, as adopted, by contrast, in many prior art cases. Therefore, the cup is economical to produce and easy to wash.

The present invention will now be further described with reference to illustrative and not limiting examples.

### EXAMPLE 1

### Preparation of a cup of green tea

A rigid cylindrical-shaped polycarbonate cup was made available, having a bottom 65 mm in diameter, having a handle and a protection band placed on the outside of the polycarbonate cup, and having a capacity of 250 ml, and containing a disposable paper filter-bag containing about 2.5 g of leaf green tea and fixed to the cup by means of a pressure coupling.

200 ml of water at room-temperature were poured into the cup so that the filter bag and its contents were soaked into the water and the filter content was completely wet. A removable lid was then put onto the open upper end of the cup. The lid, which was also rigid, for example of polycarbonate, had a vent valve.

The so-formed apparatus was then put in a microwave oven at the power of 800 Watts for a predetermined radiation time of 2 minutes.

At the end of the radiation time, the apparatus was extracted from the oven. The temperature of the obtained drink was 70 °C and it was ready to drink upon removal of the lid and filter.

The obtained drink had excellent organoleptic characteristics, indistinguishable, and in certain cases superior with respect to corresponding traditionally-prepared drinks. With respect to a corresponding drink prepared in a microwave oven according to prior art methods, the drink of the present invention was more aromatic, more flavoursome and richer in taste.

### EXAMPLE 2

### Preparation of a cup of coffee

A rigid cylindrical-shaped polycarbonate cup 2 was made available, having a bottom 45 mm in diameter, having a handle, and a capacity of 100 ml, and containing a disposable filter paper coffee pod containing about 3 g of roasted powder-ground coffee and fixed to the cup by means of a pressure coupling.

75 ml of water at room-temperature were poured into the cup so that the filter coffee pod and its contents were soaked into the water and the pod content was completely wet. A removable lid was then put onto the open upper end of the cup. The cup had a vent valve.

The so-formed apparatus was then put in a microwave oven at the power of 1200 Watts for a predetermined radiation time of about 1 minute.

At the end of the radiation time, the apparatus was extracted from the oven. The temperature of the obtained drink was 80 °C and it was ready to drink upon removal of the lid and pod.

The obtained drink had excellent organoleptic characteristics, indistinguishable, and in certain cases superior, with respect to corresponding traditionally-prepared drinks. With respect to a corresponding drink prepared in a microwave oven according to prior art methods, the drink of the present invention was more aromatic, more flavoursome and richer and more intense in taste.

Obviously, in order to meet contingent and specific requirements, a person skilled in the art could bring several modifications and variants to the above-described invention, all however falling within the scope of protection of the invention as defined by the following claims.

## Claims

1. Method for the preparation of a cup of ready to drink single serving hot drink comprising the steps of:
a) infusing an infusion material, which is contained in a filtering device, in a single serving size cup containing a liquid; and
b) exposing said cup containing a liquid and said infusion material to microwave radiation for a predetermined radiation time,
wherein said liquid heats up during said radiation time to a temperature comprised between 70 and 90 °C and wherein said infusion material is immersed in said liquid prior to its exposure to the microwaves.

2. Method according to claim 1, wherein said liquid is water, milk, soya or rice milk, preferably water.

3. Method according to claim 1 or 2, wherein said infusion material is a plant material suitable for infusion for the preparation of tea, coffee, barley coffee, chamomile tea, tisanes, aromatic drinks, and the like.

4. Method according to any one of the previous claims, wherein said filtering device is a filter-bag or a pod.

5. Method according to any one of the previous claims, wherein said liquid heats up to a temperature comprised between 70 and 80 °C, more preferably about 70 °C.

6. Method according to any one of the previous claims, wherein said microwave radiation is performed at a power comprised between 500 and 1200 Watts for a period of time comprised between 1 minute and 3 minutes.

7. Method according to any one of the previous claims, wherein said method is carried out by means of an apparatus (1) comprising a fully microwave-permeable cup (2), a fully microwave-permeable filtering device (3) containing said infusion material (3a), and a removable lid (5).

8. Method according to any one of the previous claims, wherein said lid (5) is leak-tight re-closeable onto said cup (2).

9. Method according to any one of the previous claims, wherein said apparatus (1) comprises a safety vent means (6).

10. A system for carrying out the method according to any one of the previous claims, comprising an infusion material (3a) and an apparatus (1) comprising a fully microwave-permeable cup (2), a removable lid (5), and a fully microwave-permeable filtering device (3) apt to contain said infusion material (3a).

11. System according to claim 10, wherein said filtering device (3) is a filter-bag or a pod.

12. System according to any one of claims 10 and 11, wherein said apparatus (1) comprises a safety vent means (6).

13. System according to any one of claims 10 to 12, wherein said cup (2) consists of a rigid microwave-permeable plastic material chosen from the group consisting of polycarbonate (PC), polypropylene (PP), polyethylene (PE) and polyethylene terephthalate (PET), preferably polycarbonate.

14. System according to any one of claims 10 to 13, wherein said filtering device is made of filter paper or cotton gauze.

15. System according to any one of claims 10 to 14, wherein said lid (5) is leak-tight re-closeable onto said cup (2).

16. System according to any one of claims 10 to 15, wherein said lid (5) is composed of a rigid microwave-permeable plastic material chosen from the group consisting of polycarbonate (PC), polypropylene (PP), polyethylene (PE) and polyethylene terephthalate (PET), preferably polycarbonate.

17. System according to any one of claims 10 to 16, wherein said lid (5) consists of the same rigid plastic material as the cup (2), preferably polycarbonate.

18. System according to any one of claims 10 to 17, wherein said apparatus (1) comprises a handle (7).

19. System according to any one of claims 10 to 18, wherein said apparatus (1) comprises a protection means (9), preferably consisting of a container external to the cup or a band placed over a portion of the outer surface of said cup (2).

20. System according to any one of claims 10 to 19, wherein said apparatus (1) comprises a covering film for the cup (2) containing the liquid (4), and a filtering device (3) interposed between said film and said lid (5).
